# FASCICULE DE BREVET EUROPEEN

(11) **EP 4 553 344 B1**
(45) Date de publication et mention de la délivrance du brevet: **16.09.2026**
(21) Numéro de dépôt: 24202073.3
(22) Date de dépôt: 23.09.2024
(51) Int. Cl.: F16H 25/22, F16H 25/24

(54) **PIÈCE MONOBLOC DE RECIRCULATION, ORGANE FILETÉ À RECIRCULATION ET MÉCANISME DE VIS À BILLES**
EINSTÜCKIGES RÜCKFÜHRUNGSTEIL, UMLAUFGEWINDEELEMENT UND KUGELUMLAUFSPINDELMECHANISMUS
RECIRCULATION MONOBLOCK, RECIRCULATING THREADED MEMBER AND BALL SCREW MECHANISM

(30) Priorité: 11.11.2023 FR 2312343
(43) Date de publication de la demande: 14.05.2025
(73) Titulaire: NTN Europe, 74000 Annecy (FR)
(72) Inventeur: BERTHIER, Julien, 74410 SAINT JORIOZ (FR)
(74) Mandataire: Alatis

(56) Documents cités:
- EP-B1- 1 537 345
- US-A1- 2018 216 711
- US-A1- 2022 340 194

## Description

### DOMAINE TECHNIQUE DE L'INVENTION

L'invention se rapporte à un mécanisme de vis à billes, et plus spécifiquement à un mécanisme de vis à billes pourvu de recirculateurs destinés à relier deux portions adjacentes d'une gorge d'un filetage du mécanisme de vis à billes de part et d'autre d'un filet du filetage. Elle se rapporte en particulier à un recirculateur pour un tel mécanisme, et à un organe fileté à recirculation, qui peut être une vis ou un écrou, incorporant un tel recirculateur.

### ÉTAT DE LA TECHNIQUE ANTÉRIEURE

Dans le document EP 1 537 345 B1 est décrit un mécanisme de vis à billes dont l'écrou présente un filetage de guidage des billes, et est équipé d'une pièce monobloc de recirculation logée dans une cavité de logement de l'écrou, traversant un filet du filetage, pour définir un chemin de recirculation en S reliant deux portions de la gorge du filetage de part et d'autre du filet. La pièce monobloc de recirculation présente des faces de guidage destinées à dévier les billes le long de la trajectoire en S. Il serait impossible de mouler la pièce directement, du fait de contre-dépouilles trop nombreuses. C'est pourquoi la pièce monobloc est constituée de deux demi-pièces reliées par une articulation permettant de mouler la pièce en position ouverte, dans un moule axial, puis de refermer la pièce dans sa position opérationnelle finale. Un tel mode de fabrication reste toutefois complexe.

Dans le document US 2018/0216711 A1 est décrit un écrou de mécanisme de vis à billes, qui présente un filetage de guidage des billes, et est équipé d'une pièce monobloc de recirculation logée dans une cavité fermée de logement de l'écrou, traversant un filet du filetage, pour définir un chemin de recirculation en S reliant deux portions de la gorge du filetage de part et d'autre du filet. La pièce de recirculation présente en outre des déflecteurs aux deux extrémités du chemin de recirculation, faisant face au chemin de recirculation pour guider les billes vers le chemin de recirculation. La pièce résultante présente une géométrie complexe avec des contre-dépouilles qui rendent le moulage complexe.

### EXPOSÉ DE L'INVENTION

L'invention vise à remédier aux inconvénients de l'état de la technique et à proposer une pièce monobloc de recirculation qui soit simple à fabriquer.

Pour ce faire est proposé, selon un premier aspect de l'invention, une pièce monobloc de recirculation destinée à être logée dans une cavité d'un organe fileté d'un mécanisme de vis à billes, la pièce monobloc de recirculation présentant :
- un fond, tourné dans une direction de référence parallèle à un axe de référence de la pièce de recirculation et destiné à venir en appui contre un fond de la cavité de l'organe fileté ;
- un chemin de recirculation tourné dans une direction opposée à la direction de référence, destiné à traverser un filet de l'organe fileté le long d'une trajectoire de recirculation ;
- au moins un premier déflecteur, en saillie par rapport au chemin de recirculation dans la direction opposée à la direction de référence, le premier déflecteur formant une face de guidage, située à distance du chemin de recirculation et tournée dans la direction de référence ; et
- au moins une première lumière qui débouche d'une part sur le fond et d'autre part sur le chemin de recirculation, en face de la face de guidage, la première lumière ayant une projection orthogonale sur un plan de référence perpendiculaire à l'axe de référence, qui entoure ou se confond avec la projection orthogonale de la face de guidage du premier déflecteur sur le plan de référence.

La première lumière permet d'éviter une superposition entre le premier déflecteur et le corps de la pièce monobloc, délimité par le fond, des parois latérales et le chemin de recirculation, vu en projection sur le plan de référence. Ceci permet d'envisager un moulage axial de la face de guidage sans contre-dépouille suivant un axe parallèle à l'axe de référence. L'invention tire parti du fait que dans la zone où le déflecteur est nécessaire pour incurver la trajectoire de recirculation, les billes du mécanisme de vis à billes, qui forment une file de billes avec un très faible jeu relatif, sont soulevées de proche en proche du chemin de recirculation pour venir en appui de la face de guidage du déflecteur. Il est donc possible de prévoir la lumière, qui vient au moins partiellement interrompre le chemin de recirculation, sans conséquence pour le guidage des billes le long de la trajectoire de recirculation. Accessoirement, la lumière permet de diminuer la quantité de matière nécessaire pour constituer la pièce monobloc de recirculation.

Suivant un mode de réalisation, la pièce monobloc de recirculation comporte un deuxième déflecteur, en saillie par rapport au chemin de recirculation dans la direction opposée à la direction de référence, le deuxième déflecteur formant une face de guidage, située à distance du chemin de recirculation et tournée dans la direction de référence, la pièce monobloc comportant au moins une deuxième lumière qui débouche sur le fond et sur le chemin de recirculation de la pièce monobloc de recirculation, en face de la face de guidage du deuxième déflecteur, la deuxième lumière ayant une projection orthogonale sur le plan de référence, qui entoure ou se confond avec la projection orthogonale de la face de guidage du deuxième déflecteur sur le plan de référence.

Suivant un mode de réalisation, le chemin de recirculation décrit une trajectoire en forme de S avec deux extrémités, chacune destinée à être en continuité avec un fond de filetage d'un côté du filet traversé par le chemin de recirculation. De façon préférentielle, le premier déflecteur est situé au niveau d'une portion courbe de la trajectoire en forme de S, et le deuxième déflecteur est situé au niveau d'une deuxième portion courbe de la trajectoire en forme de S.

Suivant un mode de réalisation, le fond de la pièce monobloc de recirculation est plan. De façon préférentielle le fond de la pièce monobloc de recirculation est perpendiculaire à l'axe de référence. Alternativement, le fond de la pièce monobloc peut être une surface gauche, par exemple concave ou convexe, par exemple une surface d'enveloppe cylindrique.

La première lumière, et le cas échéant la deuxième lumière, ont de préférence une enveloppe constituée par une surface réglée, de préférence avec une génératrice faisant avec l'axe de référence un angle de dépouille de préférence supérieur à 2°, ouvert vers le fond de la pièce monobloc.

Suivant un mode de réalisation préféré, la première lumière, et le cas échéant la deuxième lumière, s'ouvrent sans contre-dépouille dans la direction de référence, ce qui signifie que lorsqu'on projette orthogonalement sur le plan de référence deux sections quelconques d'une lumière par des plans de section parallèles au plan de référence, la projection de la section par le plan de section le plus proche du fond de la pièce monobloc entoure, le cas échéant en la contactant, la projection de la section par le plan de section le plus éloigné du fond de la pièce monobloc. On peut alors fabriquer la pièce monobloc par moulage axial.

Suivant un autre aspect de l'invention, celle-ci a trait à un organe fileté à recirculation pour un mécanisme de vis à billes, l'organe fileté à recirculation présentant un filetage, l'organe fileté à recirculation étant équipé d'un ou plusieurs recirculateurs, chacun des recirculateurs étant logé dans une cavité de logement de l'organe fileté à recirculation, la cavité de logement traversant un filet du filetage, caractérisé en ce que chacun des recirculateurs est une pièce monobloc de recirculation selon l'une quelconque des revendications précédentes, le fond de la pièce monobloc de recirculation étant en appui contre un fond de la cavité de logement, le chemin de recirculation de la pièce monobloc de recirculation reliant entre elles deux portions d'une gorge du filetage de part et d'autre du filet traversé par la cavité de logement. De préférence, l'organe fileté à recirculation est équipé d'un nombre N supérieur ou égal à deux, et de préférence égal à trois, de recirculateurs, décalés angulairement les uns des autres d'un angle $\frac{2 π}{N}$ autour d'un axe d'hélice du filetage.

Suivant un mode de réalisation, l'organe fileté à recirculation peut être une vis de mécanisme de vis à billes ou un écrou de mécanisme de vis à billes.

Suivant un autre aspect de l'invention, celle-ci a trait à un mécanisme de vis à billes comportant deux organes filetés, à savoir une vis et un écrou, et des billes, l'un des deux organes filetés étant un organe fileté à recirculation tel que décrit précédemment, le mécanisme de vis à billes comportant en outre des billes formant une ou plusieurs files de billes, chacune associée à une des pièces monoblocs de recirculation, et chacune disposée le long d'une trajectoire en boucle passant par le chemin de recirculation de la pièce monobloc de recirculation associée et par les deux portions de la gorge du filetage de part et d'autre du filet traversé par la cavité de logement.

### BRÈVE DESCRIPTION DES FIGURES

D'autres caractéristiques et avantages de l'invention ressortiront à la lecture de la description qui suit, en référence aux figures annexées.
[Fig. 1] La figure 1 illustre un mécanisme de vis à bille suivant un mode de réalisation de l'invention.
[Fig. 2] La figure 2 illustre un organe fileté de recirculation, en l'espèce une vis, du mécanisme de vis à bille de la figure 1, équipé de pièces monobloc de recirculation selon un mode de réalisation de l'invention.
[Fig. 3] La figure 3 illustre en coupe suivant un plan de coupe III-III, un détail de l'insertion d'une des pièces monobloc de recirculation dans l'organe fileté de la figure 2.
[Fig. 4] La figure 4 illustre la pièce monobloc de la figure 2.
[Fig. 5] La figure 5 illustre une projection orthogonale d'un détail de la pièce monobloc de la figure 2 sur un plan de référence.

Pour plus de clarté, les éléments identiques ou similaires sont repérés par des signes de référence identiques sur l'ensemble des figures.

### DESCRIPTION DÉTAILLÉE DE MODES DE REALISATION

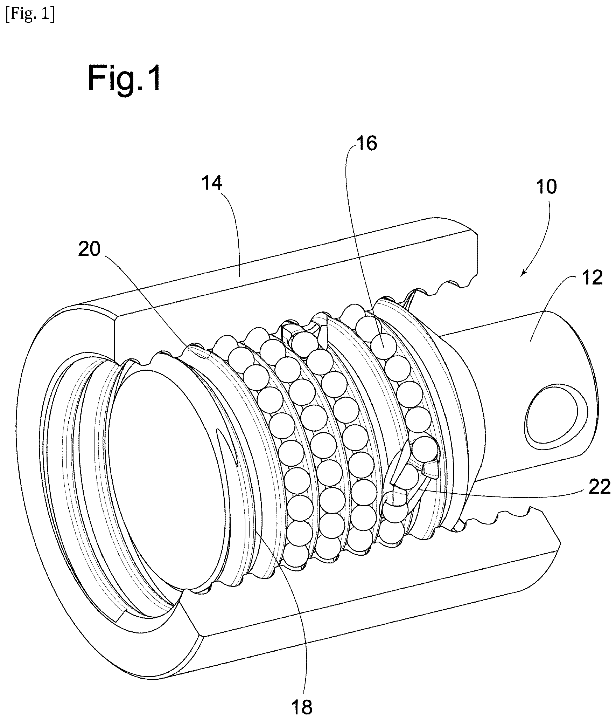

Sur la figure **1** est illustré un mécanisme de vis à billes **10** comportant deux organes filetés, à savoir une vis **12** et un écrou **14,** et des billes **16,** disposées entre un filetage **18** de la vis **12** et un filetage **20** de l'écrou **14,** pour guider le mouvement hélicoïdal relatif entre la vis **12** et l'écrou **14.** Chaque filetage **18, 20** est défini par une gorge hélicoïdale dont les flancs forment un filet hélicoïdal.

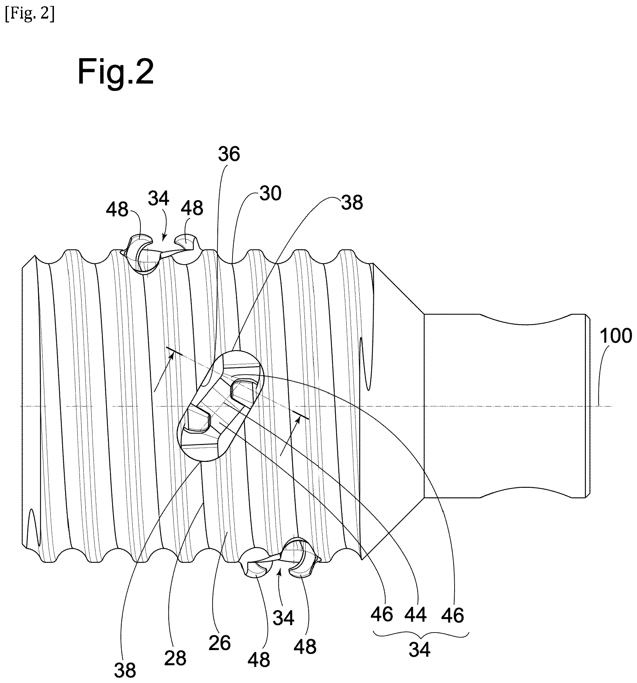

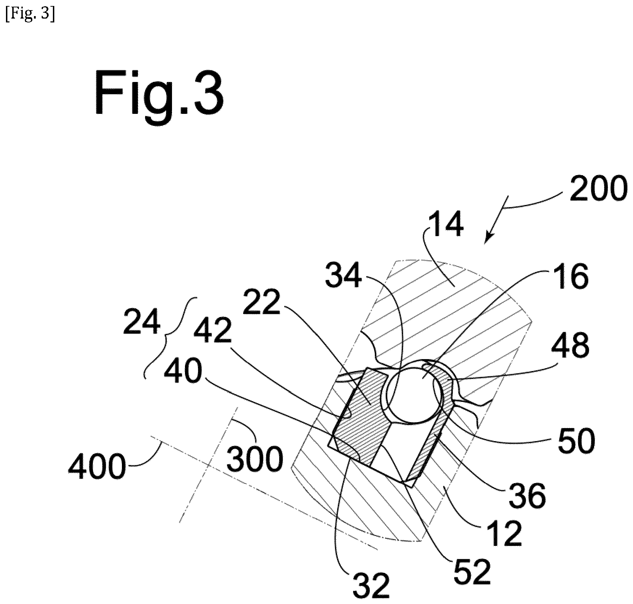

L'un des deux organes filetés, dans ce mode de réalisation la vis **12,** sera dit dans la suite organe fileté à recirculation car il est équipé de recirculateurs **22,** comme illustré sur les figures **2** et **3****.** Chacun des recirculateurs **22** est logé dans une cavité de logement **24** associée, formée dans l'organe fileté à recirculation **12,** et qui traverse un filet **26** du filetage **18** de l'organe fileté à recirculation **12.** Pour déboucher sur deux portions **28, 30** de la gorge du filetage de part et d'autre du filet **26.**

Dans ce mode de réalisation, les recirculateurs **22** sont au nombre de quatre, et chacun définit, avec les portions **28, 30** de la gorge du filetage de part et d'autre du filet **26,** une trajectoire en boucle sur un tour pour une file de billes **16.** Les quatre recirculateurs **22** sont disposés à distance les uns des autres le long de l'axe **100** de l'organe fileté à recirculation **12,** distants axialement d'une distance supérieure à un pas d'hélice P du filetage de l'organe fileté à recirculation, et décalés angulairement à **90°** les uns des autres. On comprendra toutefois que dans d'autres modes de réalisation, le nombre N de recirculateurs peut être quelconque. Pour une disposition équilibrée et compacte, on pourra choisir un décalage angulaire de $\frac{2 π}{N}$ et une distance axiale égale *à* $\frac{N + 1}{N} P$ entre deux recirculateurs **22** adjacents.

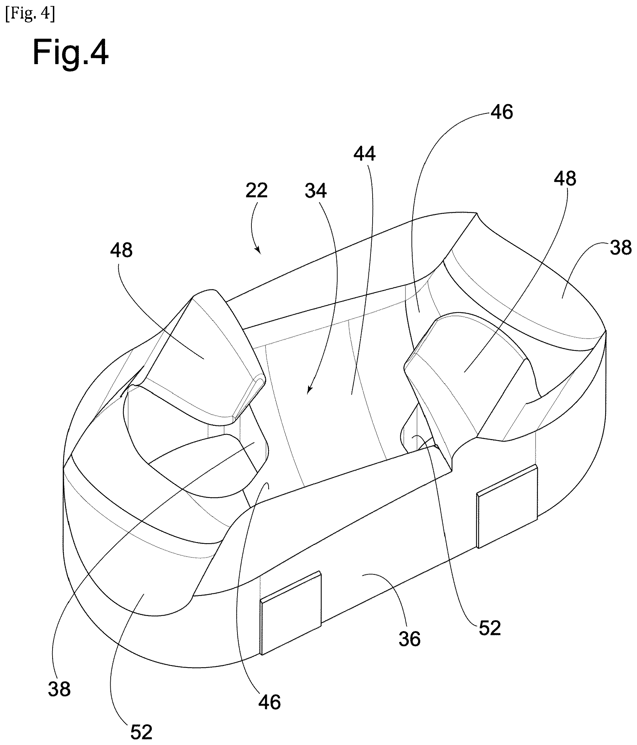

De façon remarquable, chaque recirculateur **22** se présente sous forme d'une pièce monobloc fabriquée par moulage dans un moule axial. La pièce monobloc **22,** illustrée sur la figure **4****,** comporte un fond **32,** tourné dans une direction de référence **200** parallèle à un axe de référence **300** de la pièce monobloc **22,** une face supérieure opposée au fond **32** et sur laquelle est formé un chemin de recirculation **34,** et des parois latérales **36** joignant le fond à la face supérieure. Le chemin de recirculation **34** est une gorge dont le profil peut être par exemple en arc de cercle ou en ogive, qui définit une trajectoire de recirculation entre deux extrémités **38** de la gorge. Lorsque la pièce monobloc de recirculation **22** est logée dans la cavité de logement associée **24** de l'organe fileté à recirculation **12,** le fond **32** de la pièce monobloc de recirculation **22** vient en appui contre un fond **40** de la cavité de logement **24,** les parois latérales **36** de la pièce monobloc de recirculation **22** viennent en appui contre des parois latérales **42** de la cavité de logement **24,** et les extrémités **38** du chemin de recirculation **34** sont disposées dans l'alignement des portions **28, 30** de la gorge du filetage de part et d'autre du filet **26** de l'organe fileté à recirculation **12.**

Le chemin de recirculation **34** est de préférence en S avec une portion médiane **44** reliée aux extrémités **38** par deux portions courbes **46** assurant deux changements de directions.

La pièce monobloc de recirculation **22** comporte en outre deux déflecteurs 48, positionnés chacun au niveau d'une des deux portions courbes **46,** en saillie par rapport au chemin de recirculation **34** dans la direction opposée à la direction de référence **200,** et chacun formant une face de guidage **50,** tournée dans la direction de référence **200,** à distance du chemin de recirculation **34** dans la direction opposée à la direction de référence **200.**

De façon remarquable, la pièce monobloc **22** comporte deux lumières **52,** chacune associée à l'un des deux déflecteurs **48.** Les deux lumières **52** s'étendent parallèlement au même axe de référence **300** de la pièce monobloc et débouchent à une extrémité sur le fond **32** et à l'extrémité opposée sur le chemin de recirculation **34,** en face du déflecteur **48** associé. Les deux lumières **52** ont un angle de dépouille ouvert vers le fond **32,** suffisant pour permettre leur démoulage axial, par exemple supérieur à 2°.

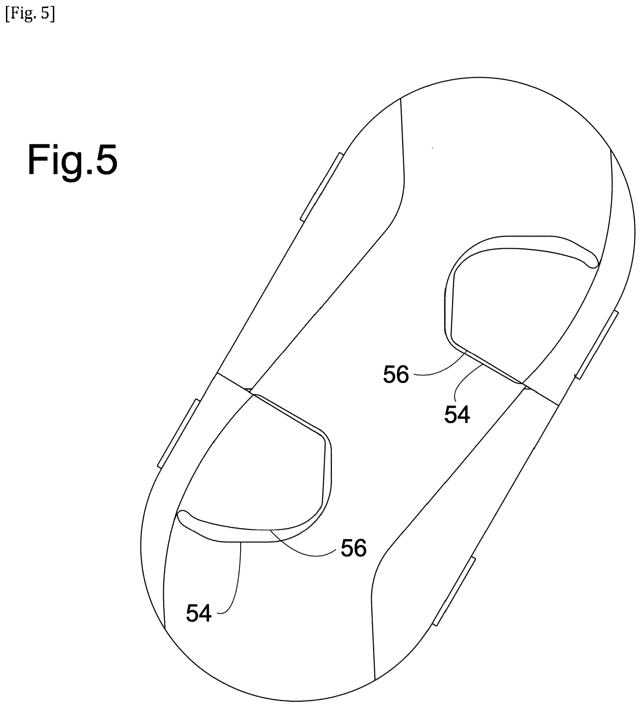

En projection orthogonale sur un plan de référence **400** perpendiculaire à l'axe de référence **300,** et comme illustré sur la figure **5****,** chaque lumière **52** a un pourtour intérieur **54** qui entoure ou se confond avec la projection orthogonale **56** de la face de guidage **50** du déflecteur **48** associé. En pratique, ceci permet de réaliser la face de guidage **50,** et en l'occurrence l'ensemble de la pièce monobloc de recirculation **22,** par moulage par injection dans un moule en deux coquilles ne nécessitant pas de tiroirs pour réaliser les déflecteurs **48.** En effet, il est possible de réaliser, dans l'une des coquilles formant la cavité du moule, des reliefs qui constituent, dans la pièce moulée finie, le fond **32,** les lumières **52** et la face de guidage **50,** des reliefs complémentaires étant prévus dans l'autre coquille, pour délimiter la face opposée des déflecteurs **48,** l'axe d'éjection du moule étant parallèle à l'axe de référence **300** de la pièce.

Le long d'une trajectoire en boucle définie par deux portions adjacentes **28, 30** de la gorge du filetage, de part et d'autre d'un filet **26** de l'organe fileté à recirculation **12,** et par un recirculateur **22** associé, ainsi que par le filetage **20** de l'autre organe fileté **14** du mécanisme de vis à billes **10,** les billes **16** forment une file continue, le jeu existant entre deux billes adjacentes étant inférieur au rayon des billes **16,** et de préférence inférieur à 1/10^{ème} du rayon des billes. Lorsqu'une bille **16** atteint une des portions courbes **46** où débouche une des lumières **52,** la bille **16** n'est plus au contact du chemin de recirculation **34,** mais est au contraire soulevée par les billes voisines pour venir au contact de la face de guidage **50** du déflecteur **48.** La présence des lumières **52** ne portent donc pas préjudice au guidage des billes **16.** Par ailleurs, on dimensionne préférentiellement la lumière **52** de telle manière que les billes **16** ne puissent y pénétrer, ceci pour gérer un cas de fonctionnement extrême, dans lequel une bille **16** viendrait en contact avec la lumière **52.** Les billes **16** n'ayant que très peu de charge dans le circuit de recirculation, le fonctionnement ne sera pas impacté.

Naturellement, l'exemple représenté sur les figures et discuté ci-dessus n'est donné qu'à titre illustratif. Le principe d'insertion d'une ou plusieurs lumières dans la pièce monobloc de recirculation est applicable également à des recirculateurs positionnés sur un écrou de mécanisme de vis à billes. Il est également applicable à un recirculateur **22** à un seul déflecteur **48.**

## Revendications

1. Pièce monobloc de recirculation (22) destinée à être logée dans une cavité (24) d'un organe fileté (12, 14) d'un mécanisme de vis à billes (10), la pièce monobloc de recirculation (22) présentant :
- un fond (32), tourné dans une direction de référence (200) parallèle à un axe de référence (300) de la pièce de recirculation (22) et destiné à venir en appui contre un fond (40) de la cavité (24) de l'organe fileté (12, 14) ;
- un chemin de recirculation (34) tourné dans une direction opposée à la direction de référence (200), destiné à traverser un filet (26) de l'organe fileté (12, 14) le long d'une trajectoire de recirculation ; et
- au moins un premier déflecteur (48), en saillie par rapport au chemin de recirculation (34) dans la direction opposée à la direction de référence (200), le premier déflecteur (48) formant une face de guidage (50), située à distance du chemin de recirculation (34) et tournée dans la direction de référence (200) ;
**caractérisée en ce que** la pièce monobloc (22) comporte au moins une première lumière (52) qui débouche d'une part sur le fond (32) et d'autre part sur le chemin de recirculation (34), en face de la face de guidage (50), la première lumière (52) ayant une projection orthogonale (54) sur un plan de référence (400) perpendiculaire à l'axe de référence (300), qui entoure ou se confond avec la projection orthogonale (56) de la face de guidage (50) du premier déflecteur (48) sur le plan de référence (400).

2. Pièce monobloc de recirculation (22) selon la revendication 1, **caractérisée en ce qu'**elle comporte un deuxième déflecteur (48), en saillie par rapport au chemin de recirculation (34) dans la direction opposée à la direction de référence (200), le deuxième déflecteur (48) formant une face de guidage (50), située à distance du chemin de recirculation (34) et tournée dans la direction de référence (200), la pièce monobloc comportant au moins une deuxième lumière (52) qui débouche sur le fond (32) et sur le chemin de recirculation (34) de la pièce monobloc de recirculation (22), en face de la face de guidage (50) du deuxième déflecteur (48), la deuxième lumière (52) ayant une projection orthogonale (54) sur le plan de référence (400), qui entoure ou se confond avec la projection orthogonale (56) de la face de guidage (50) du deuxième déflecteur (48) sur le plan de référence (400).

3. Pièce monobloc de recirculation (22) selon l'une quelconque des revendications précédentes, **caractérisée en ce que** le chemin de recirculation (34) décrit une trajectoire en forme de S avec deux extrémités (38), chacune destinée à être en continuité avec un fond de filetage (28, 30) d'un côté du filet (26) traversé par le chemin de recirculation (34).

4. Pièce monobloc de recirculation (22) selon la revendication 3 en combinaison avec la revendication 2, **caractérisée en ce que** le premier déflecteur (48) est situé au niveau d'une portion courbe (46) de la trajectoire en forme de S, et le deuxième déflecteur (48) est situé au niveau d'une deuxième portion courbe (46) de la trajectoire en forme de S.

5. Pièce monobloc de recirculation (22) selon l'une quelconque des revendications précédentes, **caractérisée en ce que** le fond (32) de la pièce monobloc de recirculation (22) est plan.

6. Pièce monobloc de recirculation (22) selon la revendication 5, **caractérisée en ce que** le fond (32) de la pièce monobloc de recirculation (22) est perpendiculaire à l'axe de référence (300).

7. Pièce monobloc de recirculation (22) selon l'une quelconque des revendications précédentes, **caractérisée en ce que** la première lumière (52), et le cas échéant la deuxième lumière (52), s'ouvrent sans contre-dépouille dans la direction de référence (200).

8. Organe fileté à recirculation (12) pour un mécanisme de vis à billes (10), l'organe fileté à recirculation (12) présentant un filetage (18), l'organe fileté à recirculation (12) étant équipé d'un ou plusieurs recirculateurs (22), chacun des recirculateurs (22) étant logé dans une cavité de logement (24) de l'organe fileté à recirculation (12), la cavité de logement (24) traversant un filet (26) du filetage (18), **caractérisé en ce que** chacun des recirculateurs (22) est une pièce monobloc de recirculation selon l'une quelconque des revendications précédentes, le fond (32) de la pièce monobloc de recirculation (22) étant en appui contre un fond (40) de la cavité de logement (24), le chemin de recirculation (34) de la pièce monobloc de recirculation (22) reliant entre elles deux portions (28, 30) d'une gorge du filetage de part et d'autre du filet (26) traversé par la cavité de logement (24).

9. Organe fileté à recirculation (12) selon la revendication 8, **caractérisé en ce qu'**il est équipé d'un nombre N supérieur ou égal à deux, et de préférence égal à trois, de recirculateurs (22), décalés angulairement les uns des autres d'un angle $\frac{2 π}{N}$ autour d'un axe d'hélice (100) du filetage (18).

10. Organe fileté à recirculation (12) selon l'une quelconque des revendications 8 à 9, **caractérisé en ce que** l'organe fileté à recirculation (12) est une vis de mécanisme de vis à billes.

11. Organe fileté à recirculation selon l'une quelconque des revendications 8 à 10, **caractérisé en ce que** l'organe fileté à recirculation est un écrou (14) de mécanisme de vis à billes (10).

12. Mécanisme de vis à billes (10) comportant deux organes filetés, à savoir une vis (12) et un écrou (14), et des billes (16), l'un des deux organes filetés étant un organe fileté à recirculation (12) selon l'une des revendications 8 à 11, le mécanisme de vis à billes (10) comportant en outre des billes (16) formant une ou plusieurs files de billes, chacune associée à une des pièces monoblocs de recirculation (22), et chacune disposée le long d'une trajectoire en boucle passant par le chemin de recirculation (34) de la pièce monobloc de recirculation (22) associée et par les deux portions (28, 30) de la gorge du filetage de part et d'autre du filet (26) traversé par la cavité de logement (24).

## Patentansprüche

1. Einstückiges Umlaufteil (22) zur Aufnahme in einem Hohlraum (24) eines Gewindeorgans (12, 14) eines Kugelumlaufspindelmechanismus (10), wobei das einstückige Umlaufteil (22) aufweist:
- einen Boden (32), der in eine Referenzrichtung (200) parallel zu einer Referenzachse (300) des Umlaufteils (22) gerichtet ist und dazu bestimmt ist, an einem Boden (40) des Hohlraums (24) des Gewindeorgans (12, 14) anzuliegen;
- einen Umlaufweg (34), der in eine der Referenzrichtung (200) entgegengesetzte Richtung gerichtet ist und dazu bestimmt ist, einen Gewindegang (26) des Gewindeorgans (12, 14) entlang einer Umlaufbahn zu durchqueren; und
- mindestens einen ersten Deflektor (48), der in Bezug auf den Umlaufweg (34) in der der Referenzrichtung (200) entgegengesetzten Richtung vorsteht, wobei der erste Deflektor (48) eine Führungsfläche (50) bildet, die beabstandet von dem Umlaufweg (34) angeordnet ist und in die Referenzrichtung (200) gerichtet ist;
**dadurch gekennzeichnet, dass** das einstückige Teil (22) mindestens eine erste Öffnung (52) aufweist, die einerseits in den Boden (32) und andererseits in den Umlaufweg (34) gegenüber der Führungsfläche (50) mündet, wobei die erste Öffnung (52) eine orthogonale Projektion (54) auf eine zur Referenzachse (300) senkrechte Referenzebene (400) aufweist, die die orthogonale Projektion (56) der Führungsfläche (50) des ersten Deflektors (48) auf die Referenzebene (400) umgibt oder mit dieser zusammenfällt.

2. Einstückiges Umlaufteil (22) nach Anspruch 1,
**dadurch gekennzeichnet, dass** es einen zweiten Deflektor (48) aufweist, der in entgegengesetzter Richtung zur Referenzrichtung (200) gegenüber dem Umlaufweg (34) vorsteht, wobei der zweite Deflektor (48) eine Führungsfläche (50) bildet, die im Abstand zum Umlaufweg (34) angeordnet ist und in die Referenzrichtung (200) weist, wobei das einstückige Teil mindestens eine zweite Öffnung (52) aufweist, die in den Boden (32) und in den Umlaufweg (34) des einstückigen Umlaufteils (22) mündet, gegenüber der Führungsfläche (50) des zweiten Deflektors (48), wobei die zweite Öffnung (52) eine orthogonale Projektion (54) auf die Referenzebene (400) aufweist, die die orthogonale Projektion (56) der Führungsfläche (50) des zweiten Deflektors (48) auf die Referenzebene (400) umgibt oder mit dieser zusammenfällt.

3. Einstückiges Umlaufteil (22) nach einem der vorstehenden Ansprüche, **dadurch gekennzeichnet, dass** der Umlaufweg (34) eine S-förmige Bahn mit zwei Enden (38) beschreibt, die jeweils dazu bestimmt sind, sich an einen Gewindeboden (28, 30) auf einer Seite des von dem Umlaufweg (34) durchquerten Gewindegangs (26) anzuschließen.

4. Einstückiges Umlaufteil (22) nach Anspruch 3 in Kombination mit Anspruch 2, **dadurch gekennzeichnet, dass** der erste Deflektor (48) im Bereich eines gekrümmten Abschnitts (46) der S-förmigen Bahn angeordnet ist und der zweite Deflektor (48) im Bereich eines zweiten gekrümmten Abschnitts (46) der S-förmigen Bahn angeordnet ist.

5. Einteiliges Umlaufteil (22) nach einem der vorstehenden Ansprüche, **dadurch gekennzeichnet, dass** der Boden (32) des einstückigen Umlaufteils (22) eben ist.

6. Einstückiges Umlaufteil (22) nach Anspruch 5,
**dadurch gekennzeichnet, dass** der Boden (32) des einstückigen Umlaufteils (22) senkrecht zur Referenzachse (300) ist.

7. Einstückiges Umlaufteil (22) nach einem der vorstehenden Ansprüche, **dadurch gekennzeichnet, dass** sich die erste Öffnung (52) und gegebenenfalls die zweite Öffnung (52) ohne Hinterschneidung in der Referenzrichtung (200) öffnen.

8. Umlaufgewindeorgan (12) für einen Kugelumlaufspindelmechanismus (10), wobei das Umlaufgewindeorgan (12) ein Gewinde (18) aufweist, wobei das Umlaufgewindeorgan (12) mit einem oder mehreren Umlaufelementen (22) ausgestattet ist, wobei jedes der Umlaufelemente (22) in einem Aufnahmehohlraum (24) des Umlaufgewindeorgans (12) untergebracht ist, wobei der Aufnahmehohlraum (24) einen Gewindegang (26) des Umlaufgewindes (18) durchquert, **dadurch gekennzeichnet, dass** jedes der Umlaufelemente (22) ein einstückiges Umlaufteil nach einem der vorstehenden Ansprüche ist, wobei der Boden (32) des einstückigen Umlaufteils (22) an einem Boden (40) des Aufnahmehohlraums (24) anliegt, wobei der Umlaufweg (34) des einstückigen Umlaufteils (22) zwei Abschnitte (28, 30) einer Gewindenut beiderseits des von dem Aufnahmehohlraum (24) durchquerten Gewindeganges (26) miteinander verbindet.

9. Umlaufgewindeorgan (12) nach Anspruch 8,
**dadurch gekennzeichnet, dass** es mit einer Anzahl N größer oder gleich zwei, und vorzugsweise gleich drei, von Umlaufelementen (22) ausgestattet ist, die
winkelmäßig voneinander um einen Winkel $\frac{2 π}{N}$ um eine Schraubenachse (100) des Gewindes (18) versetzt sind.

10. Umlaufgewindeorgan (12) nach einem der Ansprüche 8 bis 9,
**dadurch gekennzeichnet, dass** das Umlaufgewindeorgan (12) eine Schraube eines Kugelumlaufspindelmechanismus ist.

11. Umlaufgewindeorgan nach einem der Ansprüche 8 bis 10,
**dadurch gekennzeichnet, dass** das Umlaufgewindeorgan eine Mutter (14) eines Kugelumlaufspindelmechanismus (10) ist.

12. Kugelumlaufspindelmechanismus (10) mit zwei Gewindeorganen, nämlich einer Schraube (12) und einer Mutter (14), sowie Kugeln (16), wobei eines der beiden Gewindeorgane ein Umlaufgewindeorgan (12) nach einem der Ansprüche 8 bis 11 ist, wobei der Kugelumlaufspindelmechanismus (10) ferner Kugeln (16) umfasst, die eine oder mehrere Kugelreihen bilden, von denen jede einem der einstückigen Umlaufteilen (22) zugeordnet ist und jeweils entlang einer Schleifenbahn angeordnet ist, die durch den Umlaufweg (34) des zugehörigen einstückigen Umlaufelements (22) und durch die beiden Abschnitte (28, 30) der Gewindenut beiderseits des von dem Aufnahmehohlraum (24) durchquerten Gewindegangs (26) verläuft.

## Claims

1. A one-piece recirculation part (22) intended to be accommodated in a cavity (24) of a threaded member (12, 14) of a ballscrew mechanism (10), the one-piece recirculation part (22) having:
- a bottom (32), turned in a reference direction (200) parallel to a reference axis (300) of the recirculation part (22) and intended to bear against a bottom (40) of the cavity (24) of the threaded member (12, 14);
- a recirculation path (34) turned in a direction opposite to the reference direction (200), designed to pass through a thread (26) of the threaded member (12, 14) along a recirculation path;
- at least one first deflector (48), projecting from the recirculation path (34) in the opposite direction to the reference direction (200), the first deflector (48) forming a guide face (50), located at a distance from the recirculation path (34) and facing in the reference direction (200);
**characterized in that** the one-piece part (22) comprises at least one first lumen (52) which opens out on the one hand onto the bottom (32) and on the other hand onto the recirculation path (34), opposite the guide face (50), the first lumen (52) having an orthogonal projection (54) onto a reference plane (400) perpendicular to the reference axis (300), which surrounds or coincides with an orthogonal projection (56) of the guide face (50) of the first deflector (48) onto the reference plane (400).

2. The one-piece recirculation part (22) according to claim 1, **characterized in that** it comprises a second deflector (48), projecting from the recirculation path (34) in the opposite direction to the reference direction (200), the second deflector (48) forming a guide face (50), located at a distance from the recirculation path (34) and facing in the reference direction (200), the one-piece part comprising at least one second lumen (52) opening onto the bottom (32) and onto the recirculation path (34) of the one-piece recirculation part (22), opposite the guide face (50) of the second deflector (48), the second lumen (52) having an orthogonal projection (54) onto the reference plane (400), which surrounds or coincides with the orthogonal projection (56) of the guide face (50) of the second deflector (48) onto the reference plane (400).

3. The one-piece recirculation part (22) according to any of the preceding claims, **characterized in that** the recirculation path (34) describes an S-shaped path with two ends (38), each intended to be continuous with a thread root (28, 30) on one side of the thread (26) through which the recirculation path (34) passes.

4. The one-piece recirculation part (22) according to claim 3 in combination with claim 2, **characterized in that** the first deflector (48) is located at a curved portion (46) of the S-shaped path, and the second deflector (48) is located at a second curved portion (46) of the S-shaped path.

5. The one-piece recirculation part (22) according to any of the preceding claims, **characterized in that** the bottom (32) of the one-piece recirculation part (22) is flat.

6. The one-piece recirculation part (22) according to claim 5, **characterized in that** the bottom (32) of the one-piece recirculation part (22) is perpendicular to the reference axis (300).

7. The one-piece recirculation part (22) according to any of the preceding claims, **characterized in that** the first lumen (52), and where appropriate the second lumen (52), open without undercuts in the reference direction (200).

8. A recirculation threaded member (12) for a ballscrew mechanism (10), the recirculation threaded member (12) having a threading (18), the recirculation threaded member (12) being equipped with one or more recirculators (22), each of the recirculators (22) being housed in a housing cavity (24) of the recirculation threaded member (12), the housing cavity (24) passing through a thread (26) of the threading (18), **characterized in that** each of the recirculators (22) is a one-piece recirculation part according to any one of the preceding claims, the bottom (32) of the one-piece recirculation part (22) bearing against a bottom (40) of the housing cavity (24), the recirculation path (34) of the one-piece recirculation part (22) interconnecting two portions (28, 30) of a groove in the thread on either side of the thread (26) traversed by the housing cavity (24).

9. The recirculation threaded member (12) according to claim 8, **characterized in that** it is equipped with a number N greater than or equal to two, and preferably equal to three, recirculators (22), angularly offset from one another by an angle $\frac{2 π}{N}$ about a helix axis (100) of the threading (18).

10. The recirculation threaded member (12) according to any one of claims 8 to 9, **characterized in that** the recirculation threaded member (12) is a ballscrew mechanism screw.

11. The recirculation threaded member according to any one of claims 8 to 10, **characterized in that** the recirculation threaded member is a nut (14) of a ballscrew mechanism (10).

12. A ballscrew mechanism (10) comprising two threaded members, namely a screw (12) and a nut (14), and balls (16), one of the two threaded members being a recirculation threaded member (12) according to one of claims 8 to 11, the ballscrew mechanism (10) further comprising balls (16) forming one or more lines of balls, each associated with one of the one-piece recirculation parts (22), and each arranged along a loop path passing through the recirculation path (34) of the associated one-piece recirculation part (22) and through the two portions (28, 30) of the thread groove on either side of the thread (26) through which the housing cavity (24) passes.
